# EUROPÄISCHE PATENTANMELDUNG

(11) **EP 1 184 841 A1**
(43) Veröffentlichungstag der Anmeldung: **06.03.2002**
(21) Anmeldenummer: 00118895.2
(22) Anmeldetag: 31.08.2000
(51) Int. Cl.: G10L 15/26

(54) **Sprachgesteuerte Anordnung und Verfahren zur Spracheingabe und -erkennung**

(71) Anmelder: SIEMENS AKTIENGESELLSCHAFT, 80333 München (DE)
(72) Erfinder: Niemoeller, Meinrad, 83607 Holzkirchen (DE)

(57) **Zusammenfassung**

Sprachgesteuerte Anordnung (1) mit einer Mehrzahl von zu steuernden Geräten (3 bis 9) und einer mobilen, mit den Geräten über eine drahtlose Nachrichtenverbindung verbundene Spracheingabeeinheit (11) wobei mindestens ein Teil der Geräte jeweils einen Geräte-Wortschatzspeicher (3a bis 9a) und eine Wortschatz-Sendeeinheit (3b bis 9b) und die Spracheingabeeinheit Selektionsmittel zur richtungsabhängigen Selektion der zu ladenden Wortschätze aufweist.

## Beschreibung

Die Erfindung betrifft eine sprachgesteuerte Anordnung mit einer Mehrzahl von Geräten nach dem Oberbegriff von Anspruch 1 sowie ein in einer solchen Anordnung anwendbares Verfahren zur Spracheingabe und Spracherkennung.

Nachdem Spracherkennungssysteme sich mehr und mehr zu einer Standardkomponente leistungsfähiger Computer für den professionellen und privaten Bedarf, bis hin zu PC's und Notebooks im mittleren und unteren Preissegment, entwickelt haben, wird zunehmend an Einsatzmöglichkeiten solcher Systeme bei Geräten aus dem täglichen Lebensumfeld gearbeitet. Elektronische Geräte wie Mobiltelefone, Schnurlostelefone, PDAs und Fernbedienungen für Audio- und Videosysteme etc. verfügen üblicherweise über eine Eingabetastatur, die mindestens ein Zifferneingabefeld und eine Reihe von Funktionstasten umfaßt.

Manche dieser Geräte - insbesondere natürlich die verschiedenen Telefone, aber auch zunehmend Fernbedienungen und weitere Geräte - sind zudem mit Sprech- und gegebenenfalls auch Hörkapseln zur Spracheingabe und -ausgabe ausgestattet. Es sind auch bereits Geräte dieser Art (beispielsweise einige Typen von Mobiltelefonen) bekannt, bei denen eine einfache Spracherkennung für Steuerungsfunktionen auf dem Gerät selbst implementiert ist. Als Beispiel sei hier nur das sprachgesteuerte Aufbauen von Verbindungen durch Spracheingabe eines Namens in ein Mobiltelefon genannt, der in einem elektronischen Telefonbuch des Telefons abgespeichert ist. Weiterhin sind primitive bis einfache Sprachsteuerungen auch für andere Geräte des täglichen Lebensumfeldes bekannt, beispielsweise bei Fernsteuerungen für Audioanlagen oder Beleuchtungssysteme. Alle bekannten derartigen Geräte haben jeweils ein eigenes, dediziertes Spracherkennungssystem.

Es ist eine Entwicklung absehbar, in deren Verlauf eine zunehmende Anzahl von technischen Geräten und Systemen des täglichen Lebensumfeldes, insbesondere im Haushalt und in Kraftfahrzeugen, mit jeweils eigenen Spracherkennungssystemen ausgerüstet sein wird. Da derartige Systeme, sofern sie einen akzeptablen Bedienungskomfort und hinreichende Erkennungssicherheit bieten sollen, hard- und softwaremäßig relativ aufwendig und somit teuer sind, ist diese Entwicklung im Grunde kostentreibend und aus Sicht des Verbrauchers nur bedingt sinnvoll. Vorrangiges Ziel ist daher eine weitere Reduzierung des Hard- und Softwareaufwandes, um möglichst preisgünstige Lösungen bereitstellen zu können.

Es wurden bereits Anordnungen vorgeschlagen, bei denen mehreren technischen Geräten eine einzelne Spracheingabeeinheit zugeordnet ist, über die verschiedene Funktionen dieser Geräte per Sprachsteuerung gesteuert werden. Die Steuerungsinformation wird hierbei vorzugsweise drahtlos an (stationäre oder selbst mobile) Endgeräte übertragen. Hier taucht jedoch das technische Problem auf, daß die Spracheingabeeinheit einen sehr großen Wortschatz für die Spracherkennung vorhalten muß, um verschiedene Endgeräte steuern zu können. Die Handhabung eines großen Wortschatzes ist jedoch mit Einbußen in der Erkennungsgeschwindigkeit und -genauigkeit verbunden. Zudem hat eine derartige Anordnung den Nachteil, daß spätere, nicht bei der Realisierung der Spracheingabeeinheit vorhergesehene Ergänzungen um zusätzliche Geräte nicht ohne weiteres möglich sind. Nicht zuletzt ist eine solche Lösung noch immer recht teuer, insbesondere bedingt durch den hohen Speicherbedarf aufgrund des sehr großen Wortschatzes.

In einer auf die Anmelderin zurückgehenden unveröffentlichten deutschen Patentanmeldung wird eine sprachgesteuerte Anordnung mit einer Mehrzahl von zu steuernden Geräten und einer mobilen, mit den Geräten über eine insbesondere drahtlose Nachrichtenverbindung verbundene Spracheingabeeinheit offenbart, bei der in den einzelnen Geräten der Anordnung jeweils ein gerätespezifischer Wortschatz, jedoch keine Verarbeitungsmittel für die Spracherkennung vorgesehen sind. Die Verarbeitungskomponenten eines Spracherkennungssystems sind hingegen in der Spracheingabeeinheit (neben den Spracheingabemitteln) implementiert.

Mindestens ein Teil der Geräte weist jeweils einen Geräte-Wortschatzspeicher zur Speicherung eines gerätespezifischen Wortschatzes und eine Wortschatz-Sendeeinheit zur Übertragung des gespeicherten Wortschatzes an die Spracheingabeeinheit auf. Die Spracheingabeeinheit umfaßt dem gegenüber eine Wortschatz-Empfangseinheit zum Empfangen des von einem Gerät übertragenen Wortschatzes bzw. der von Geräten übertragenen Wortschätze. Gelangt die Spracheingabeeinheit in die räumliche Nähe eines oder mehrerer Geräte, so daß eine Nachrichtenverbindung zwischen Spracheingabeeinheit und Geräten aufgebaut wird, übertragen die Geräte ihre Wortschätze an die Spracheingabeeinheit, die diese zwischenspeichert. Sobald die Nachrichtenverbindung zwischen einem oder mehreren Geräten und der Spracheingabeeinheit abbricht, wenn beispielsweise die räumliche Entfernung zu groß wird, kann die Spracheingabeeinheit einen oder mehrere zwischengespeicherte Wortschätze wieder verwerfen. Die Spracheingabeeinheit verwaltet demanch dynamisch die Wortschätze der Endgeräte.

Der Vorteil dieser Anordnung ist vor allem darin zu sehen, daß zur Speicherung der Wortschätze in der Spracheingabeeinheit Mittel mit einer verhältnismäßig kleinen Speicherkapazität ausreichen, da aufgrund der räumlichen Trennung der Wortschätze von der eigentlichen Spracherkennungskapazität diese nicht fortwährend in der Spracheingabeeinheit vorgehalten werden müssen. Dies steigert auch die Erkennungsrate in der Spracheingabeeinheit, da weniger Wortschätze zu verarbeiten sind.

Allerdings kann es bei einer Vielzahl von räumlich eng benachbarten Geräten, insbesondere wenn sich deren Sendebereiche überschneiden, dazu kommen, daß die Spracheingabeeinheit doch eine große Anzahl von Wortschätzen speichern und verarbeiten muß oder bei begrenzter Speicherkapazität nicht alle Endgeräte bedienen kann. Gerade letzterer Fall ist für einen Anwender unkomfortabel, da dieser keinen Einfluß darauf hat, welche Wortschätze von Endgeräten in die Spracheingabeeinheit geladen und welche verworfen werden. Selbst wenn die Sendebereiche der Endgeräte verhältnismäßig klein sind - beispielsweise Durchmesser von nur wenigen Metern besitzen - kann es gerade bei einer Konzentration vieler verschiedener Endgeräte auf engem Raum wie im Haushalt oder im Büro vorkommen, daß der Anwender aufgrund der vorgenannten Probleme nur einen Teil dieser Endgeräte sprachsteuern kann.

Der Erfindung liegt daher die Aufgabe zugrunde, eine Anordnung dieser Art vorzuschlagen, die insbesondere die vorgenannten Probleme vermeidet und vor allem die Auswahl der sprachzusteuernden Endgeräte weiterbildet. Die Anordnung soll sich ferner durch niedrige Kosten und ein effizientes Spracheingabe- und -erkennungsverfahren auszeichnen.

Diese Aufgabe wird durch eine Anordnung mit den Merkmalen von Patentanspruch 1 und durch ein Verfahren mit den Merkmalen von Patentanspruch 13 gelöst.

Die Erfindung bildet die eingangs genannte sprachgesteuerte Anordnung mit einer Mehrzahl von Geräten und einer mobilen, mit den Geräten über eine drahtlose Nachrichtenverbindung verbundene Spracheingabeeinheit insbesondere dadurch weiter, daß in der Spracheingabeeinheit Selektionsmittel zur Selektion von in die Spracheingabeeinheit zu ladenden Wortschätzen vorgesehen sind. Die Selektionsmittel werten hierzu eine Richtungsinformation empfangener Signale, die von den Geräten gesendet wurden, aus. Das hier angewandte Prinzip entstammt der menschlichen Kommunikation: Ein Mensch kommuniziert mit einem anderen, indem er sich diesem zuwendet. Gespräche in der Umgebung der beiden kommunizierenden Menschen werden "ausgeblendet". Andere Menschen, denen sich die kommunizierenden Menschen nicht zuwenden, fühlen sich dementsprechend auch nicht angesprochen.

Durch die Erfindung wird erreicht, daß nur bestimmte Wortschätze von Geräten geladen werden, die durch die Selektionsmittel ausgewählt wurden. Dadurch wird die Erkennungsrate bei räumlich eng benachbarten Endgeräten wesentlich verbessert, da in die Spracheingabeeinheit aufgrund der richtungsabhängigen Auswahl weniger Wortschätze geladen werden und daher zu verarbeiten sind. Als drahtlose Übertragungsverfahren zwischen den Geräten und der Spracheingabeeinheit kommen beispielsweise Funk- oder auch Infrarot-Übertragungsstrecken in Frage.

Die Selektionsmittel umfassen vorzugsweise einen Detektor, insbesondere eine Antenne, mit einer Richtcharakteristik. Die richtungsabhängige Selektion findet durch eine Ausrichtung des Detektors auf die zu steuernden Geräte statt, da sich der Pegel eines empfangenen Signals eines Gerätes mit der Ausrichtung des Detektors in Bezug auf ein das Signal sendendes Gerät ändert. Bei einer Infrarotübertragungsstrecke umfassen die Selektionsmittel einen Infrarot-Detektor, der beispielsweise durch eine vorgesetzte Linse einen begrenzten Detektionsbereich besitzt, so daß Infrarot-Signale außerhalb des Detektionsbereiches nicht zum Laden eines entsprechenden Wortschatzes führen.

Um den Pegel empfangener Signale auswerten zu können, weist die Spracheingabeeinheit vorzugsweise eine Einrichtung zur Pegelauswertung und Steuerung auf. Diese bestimmt den Pegel mindestens eines empfangenen Signals und steuert davon abhängig das Laden eines Wortschatzes, der durch das Signal übertragen wird, mittels der Wortschatz-Empfangseinheit in den bzw. die Wortschatz-Zwischenspeicher. Vorzugsweise ist die Einrichtung zur Pegelauswertung und Steuerung dazu ausgebildet, daß ein durch ein empfangenes Signal übertragener Wortschatz erst bei Überschreiten eines bestimmten Pegels geladen wird.

Bei einer bevorzugten Ausführungsform sind in die Spracheingabeeinheit mehrere Wortschätze von Geräten gleichzeitig geladen. Die Einrichtung zur Pegelauswertung und Steuerung ist in dieser Ausführungsform zweckmäßigerweise derart ausgebildet, daß der Wortschatz eines weiteren Gerätes in die Spracheingabeeinheit geladen wird und einen dort geladenenen Wortschatz ersetzt, sobald das empfangene Signal des weiteren Gerätes einen vorgegebenen Pegel und/oder die Pegel des zu ersetzenden Wortschatz übertragenden bzw. diesem zugeordneten Signals überschreitet. Es werden somit mehrere Wortschätze in der Spracheingabeeinheit vorgehalten, so daß auch eine entsprechende Vielzahl von Geräten steuerbar ist. Allerdings bedingt dies einen entsprechenden Speicherbedarf in der Spracheingabeeinheit.

In einer Weiterbildung kann nun genau ein Wortschatz eines Gerätes in die Spracheingabeeinheit geladen sein, der durch den Wortschatz eines weiteren Gerätes ersetzt wird, sobald ein empfangenes Signal des weiteren Gerätes einen vorgegebenen Pegel und/oder den Pegel des den zu ersetzenden Wortschatz übertragenden bzw. diesem zugeordneten Signals überschreitet. Sobald also die Spracheingabeeinheit auf ein anderes Gerät gerichtet wird, so daß dessen gesendetes Signal die Kriterien zum Laden in die Spracheingabeeinheit erfüllt, wird der bereits geladene Wortschatz ersetzt. Der Vorteil dieser Ausführungsform ist insbesondere im geringen Speicherbedarf in der Spracheingabeeinheit zu sehen, da immer nur ein Wortschatz geladen ist.

Zweckmäßigerweise ist bei der vorhergehenden Ausführungsform die Einrichtung zur Pegelauswertung und Steuerung ferner dazu ausgebildet, den in die Spracheingabeeinheit geladenen Wortschätzen unterschiedliche Prioritäten zuzuteilen. Wird ein neuer Wortschatz geladen, kann anhand der Prioritäten der zu ersetzende Wortschatz festgestellt werden. Üblicherweise wird ein zu ladender Wortschatz den geladenen Wortschatz mit der niedrigsten Priorität ersetzen. Die Prioritäten können in Abhängigkeit von verschiedenen Kriterien vergeben werden, wie beispielsweise einer Priorisierung der Geräte, der Häufigkeit der Steuerung der Geräte, der Verweildauer der Wortschätze in der Spracheingabeeinheit, etc.. Sinnvollerweise wird die Priorisierung in Abhängigkeit von der Häufigkeit der Steuerung der Geräte vergeben werden, d.h. Geräte, die sehr oft gesteuert werden, haben gegenüber Geräten, die eher selten gesteuert werden, eine höhere Priorität. Vorzugsweise erfolgt jedoch die Zuweisung von Prioritäten in Abhängigkeit von den Verhältnissen der Pegel der die Wortschätze übertragenden bzw. diesen zugeordneten Signale. Ein höherer Pegel bewirkt hierbei eine höhere Priorität als.ein niedrigerer Pegel.

In einer besonders bevorzugten Ausführungsform erzeugt die Einrichtung zur Pegelauswertung und Steuerung mindestens ein Steuersignal, das die Erkennungsfunktion der Spracherkennungsstufe steuern bzw. beeinflussen kann, und zwar in Abhängigkeit von dem ausgewerteten Pegel eines empfangenen Signals. Die Beeinflussung bzw. Steuerung erfolgt vorteilhafterweise durch eine Anhebung oder Absenkung der Wahrscheinlichkeiten für das Auftreten eines Wortes oder mehrerer Worte und/oder die Übergangswahrscheinlichkeiten zwischen Worten eines Wortschatzes, die insbesondere proportional zum Pegel ist.

Durch die Beeinflussung der Wahrscheinlichkeiten beim Erkennen wird die Tatsache ausgenutzt, daß mehrere Endgeräte gleiche Befehle aufweisen und bei Eingabe eines solchen Befehls anhand der Wahrscheinlichkeit entschieden wird, welches Gerät gesteuert werden soll. Mit anderen Worten: Es können verschiedene Geräte mit gleichen Befehlen gesteuert werden, wobei der Anwender durch die Ausrichtung der Spracheingabeeinheit bestimmt, welches der Geräte angesprochen wird.

Vorzugsweise findet die Kommunikation zwischen Spracheingabeeinheit und Geräten gemäß dem Bluetooth-Standard statt. Hierzu sind die Wortschatz-Sendeeinheit bzw. Wortschatz-Sendeeinheiten und Wortschatz-Empfangseinheit als Funksende-bzw. -empfangseinheit nach dem Bluetooth-Standard ausgebildet. Der Bluetooth-Standard eignet sich besonders gut für diesen Einsatzzweck, da er insbesondere zur Übertragung von Steuerbefehlen (beispielsweise zwischen einem PC und einem Drucker) vorgesehen ist. Gerade im vorliegenden Fall werden hauptsächlich Befehle oder Wortschätze zwischen der Spracheingabeeinheit und den Geräten ausgetauscht. Als Standards für die Übertragung der Wortschätze im System können auch höherwertige Übertragungsprotokolle und Beschreibungsstandards, wie beispielsweise WAP oder XML, benutzt werden. In einer dazu alternativen bevorzugten Ausführungsform können die Wortschatz-Sendeeinheit bzw. Wortschatz-Sendeeinheiten und Wortschatz-Empfangseinheit als Infrarotsende- bzw. -empfangseinheit ausgebildet sein.

Eine typische Ausführung der sprachgesteuerten Anordnung funktioniert derart, daß zur richtungsabhängigen Selektion von Signalen, die von Geräten gesendet werden, der Detektor auf bestimmte Geräte gerichtet wird, so daß nur die Signale dieser Geräte empfangen werden. Dann werden in der Spracheingabeeinheit die Pegel der empfangenen Signale durch die Einrichtung zur Pegelauswertung und Steuerung bestimmt. Je nach dem, wie die Spracheingabeeinheit - im Falle einer Funkverbindung die Antenne mit Richtcharakteristik - in Bezug auf die Geräte ausgerichtet ist, haben einige der empfangenen Signale eine höhere Feldstärke und damit einen größeren Pegel als die übrigen Signale. Die Einrichtung zur Pegelauswertung und Steuerung steuert anhand der bestimmten Pegel der empfangenen Signale die Wortschatz-Empfangseinheit derart, daß nur Wortschätze von Geräten empfangen werden, deren Signale von der Einrichtung zur Pegelauswertung und Steuerung als ausreichend bestimmt wurden, d. h. insbesondere über einem vorgegebenen Schwellwert liegen. Auch wenn sich die Spracheingabeeinheit,genauer der Detektor, im Sende- bzw. Funkbereich mehrerer Geräte befindet, werden hierdurch nur die Wortschätze eines Teils der Geräte geladen. Die Erkennungsrate in der Spracheingabeeinheit sinkt daher nicht, wenn sich die Spracheingabeeinheit im Sende- bzw. Funkbereich vieler Geräte befindet und demnach ohne richtungsabhängige Selektion gemäß der Erfindung viele Wortschätze geladen würden.

Ein Wortschatz enthält Befehlsworte oder -phrasen in orthografischer oder phonetischer Transkription und eventuell zusätzliche Informationen für die Spracherkennung. Der Wortschatz wird an der Spracheingabeeinheit nach einer geeigneten Wandlung in das Spracherkennungssystem geladen, und zwar vorteilhafterweise in einen Wortschatz-Zwischenspeicher desselben, der vorzugsweise zwischen die Wortschatz-Empfangseinheit und die Spracherkennungsstufe geschaltet ist. Die Größe des Wortschatz-Zwischenspeichers, der vorzugsweise als flüchtiger Speicher (z. B. DRAM, SRAM, etc.) ausgebildet ist, ist zweckmäßigerweise an die Anzahl der zu verarbeitenden Wortschätze bzw. die Anzahl der gleichzeitig zu steuernden Geräte angepaßt. Um eine billige Spracheingabeeinheit zur Verfügung zu stellen, kann Wortschatz-Zwischenspeicher dadurch eingespart werden, daß die Selektionsmittel zur Pegelauswertung und Steuerung so ausgelegt sind, daß beispielsweise in die Spracheingabeeinheit gleichzeitig höchstens zwei Wortschätze zur Steuerung zweier Geräte geladen werden können. Denkbar wäre auch eine programmierbare Ausführung der Selektionsmittel zur Pegelauswertung, die bei einer Vergrößerung des Wortschatz-Zwischenspeichers zur Steuerung mehrerer Geräte entsprechend eingestellt werden können.

Die Selektionsmittel können insbesondere eine Recheneinheit aufweisen, die aus dem Pegel eines empfangenen Signals die Entfernung eines das Signal sendenden Gerätes von der Spracheingabeeinheit berechnet. Ferner ist in einem Schwellwertspeicher ein Schwellwert entsprechend einer vorgegebenen Entfernung abgelegt. Die berechnete Entfernung wird nun mittels einer Vergleichseinrichtung mit dem gespeicherten Schwellwert verglichen. Abhängig von dem Vergleichsergebnis werden insbesondere die Wortschatz-Empfangseinheit und die Spracherkennungsstufe freigeschaltet oder gesperrt. Hierzu erzeugt die Vergleichseinrichtung ein Sperr-/Freigabesignal. Die Kriterien zum Freischalten und Sperren sind über den Schwellwert vorgebbar, der beispielsweise auch vom Anwender mittels Programmierung oder Einstellung angepaßt werden kann. Beispielsweise könnte der Anwender vorgeben, daß nur Geräte in einem Umkreis von 2 m für die Spracheingabeeinheit freigeschaltet werden. Weiter entfernte Geräte sollen dagegen gesperrt werden.

Zusammenfassend bietet die erfindungsgemäße sprachgesteuerte Anordnung die Vorteile, daß
- die Erkennung bei räumlich nahen und miteinander konkurrierenden Geräten verbessert wird,
- der in der Spracheingabeeinheit zu verarbeitende Wortschatz nicht nur hinsichtlich seiner Größe, sondern auch hinsichtlich von Wahrscheinlichkeiten optimiert wird,
- die Wortschätze der verschiedenen Geräte nicht aufeinander abgestimmt sein müssen, d. h. identische Befehle enthalten können, und
- ein Anwender mit den gleichen Befehlen verschiedene Geräte steuern und nur durch die Ausrichtung der Spracheingabeeinheit bestimmen kann, welches der Geräte angesprochen werden soll.

Durch die Nutzung von richtungsabhängigen Informationen von empfangenen Signalen kann also der Gesamtwortschatz, der in der Spracheingabeeinheit vorgehalten werden soll, insgesamt gering gehalten werden. Dadurch kann auch die Sprachmodellierung der Spracherkennungsstufe optimiert werden. Zugleich wird das Problem der möglichen Überschneidung von Wortschätzen gelöst. Vorteilhaft kann die erfindungsgemäße Anordnung bei drahtlosen Nachrichtenverbindungen mit kurzer Reichweite eingesetzt werden, wie beispielsweise bei Bluetooth-Systemen oder auch Infrarot-Systemen.

Vorteile und Zweckmäßigkeiten der Erfindung ergeben sich im übrigen aus den abhängigen Ansprüchen sowie der nachfolgenden Beschreibung eines bevorzugten Ausführungsbeispiels anhand der Zeichnung. In dieser zeigt
- Fig.1: ein skizzenartiges Funktions-Blockschaltbild einer Gerätekonfiguration aus mehreren sprachgesteuerten Geräten, und
- Fig.2: ein Funktions-Blockschaltbild eines Ausführungsbeispiels einer Spracheingabeeinheit.

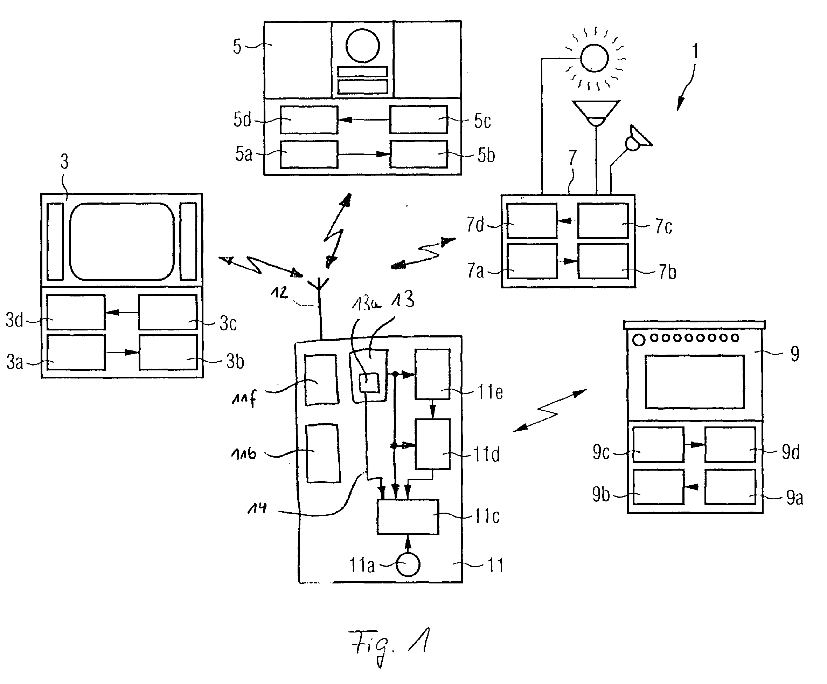

Die in Fig.1 in einem skizzenartigen Funktions-Blockschaltbild gezeigte Gerätekonfiguration 1 umfaßt mehrere sprachgesteuerte Geräte, nämlich ein Fernsehgerät 3, eine Audio-Anlage 5, eine Beleuchtungseinheit 7 und einen Küchenherd 9 mit einer Spracheingabeeinheit 11 (nachfolgend als mobiles Sprachsteuerterminal bezeichnet).

Die zu steuernden Geräte 3 bis 9 weisen jeweils einen Geräte-Wortschatzspeicher 3a bis 9a, eine nach dem Bluetooth-Standard arbeitende Wortschatzsendeeinheit 3b bis 9b, eine Steuerbefehl-Empfangseinheit 3c bis 9c und einen Mikrocontroller 3d bis 9c auf.

Das mobile Sprachsteuerterminal 11 hat eine Sprechkapsel 11a, eine Anzeigeeinheit 11b, eine mit der Sprachkapsel 11a verbundene Spracherkennungsstufe 11c, der ein Wortschatz-Zwischenspeicher 11d zugeordnet ist, eine Wortschatz-Empfangseinheit 11e, eine Steuerbefehl-Sendeeinheit 11f, eine Antenne 12 mit Richtcharakteristik und eine Pegelauswerte- und Steuereinrichtung 13.

Die verschiedenen Sende- und Empfangseinheiten der Geräte 3 bis 9 und des Sprachsteuerterminals 11 sind - in an sich bekannter Weise - so ausgebildet, daß ihre Reichweite auf den Gerätecharakter und die üblichen räumlichen Relationen zwischen Gerät und Benutzer abgestimmt ist - so ist etwa die Reichweite der Wortschatz-Sendeeinheit 9b des Küchenherdes 9 wesentlich kleiner als diejenige der Wortschatz-Sendeeinheit 7b der Beleuchtungssteuereinheit 7.

Im Wortschatz-Zwischenspeicher 11d des Sprachsteuerterminals 11 kann ein Grundwortschatz an Steuerbefehlen und zusätzlichen Begriffen implementiert sein, der in jeder Benutzungssituation die Inbetriebnahme des Gesamtsystem und gewisser Notbzw. Sicherungsfunktionen gewährleistet. Die Geräte-Wortschatzspeicher enthalten Spezialvokabular zur Steuerung des jeweiligen Gerätes. Nach dessen Übertragung kann die Spracherkennungsstufe 11c hierauf zugreifen und der Benutzer Steuerbefehle für das jeweilige Gerät einsprechen. Diese werden durch die Steuerbefehle-Sendeeinheit 11f des Sprachsteuerterminals 11 an die Steuerbefehl-Empfangseinheiten 3c bis 9c übertragen und vom jeweiligen Mikrocontroller 3d bis 9d der Geräte 3 bis 9 in Steuersignale umgesetzt.

Befindet sich das Sprachsteuerterminal 11 in dem Funkbereich der Geräte 3 bis 9, d. h. bestehen zwischen dem Sprachsteuerterminal 11 und den Geräten 3 bis 9 drahtlose Nachrichtenverbindungen, so übertragen die Geräte 3d bis 9d ihre Wortschätze aus den jeweiligen Geräte-Wortschatzspeichern 3a bis 9a an das Sprachsteuerterminal 11. Dieses empfängt die entsprechenden Signale über seine Antenne 12, die eine Richtcharakteristik aufweist, so daß die Feldstärke der von den Geräten 3 und 5 übertragenen Signale, auf die das Sprachsteuerterminal 11, insbesondere dessen Antenne 12, gerichtet ist, größer als die Feldstärke der von den Geräten 7 und 9 gesendeten Signale ist.

Die Pegelauswerte- und Steuereinrichtung 13 ermittelt den Pegel aus der Feldstärke aller empfangenen Signale durch eine Amplitudenmessung der den empfangenen Signalen entsprechenden Ausgangssignale an einem der Antenne 12 nachgeschalteten Antennenverstärker. Eine Weiterverarbeitung der entsprechenden digitalisierten Ausgangssignale kann dann mittels eines Mikrocontrollers im Sprachsteuerterminal 11 erfolgen. Eine Recheneinheit 13a der Pegelauswerte- und Steuereinrichtung berechnet aus den Ausgangssignalen des Antennenverstärkers, welche der den Signalen entsprechenden Wortschätze über die Wortschatz-Empfangseinheit 11e in den Wortschatz-Zwischenspeicher 11d geladen werden sollen.

Im vorliegenden Fall ermittelt die Recheneinheit 13a, daß die Feldstärke der von den Geräten 3 und 5 empfangenen Signale größer als die Feldstärke der von den Geräten 7 und 9 empfangenen Signale ist, und steuert daraufhin die Wortschatz-Empfangseinheit 11e und den Wortschatz-Zwischenspeicher 11d derart, daß die Wortschätze der Geräte 3 und 5 empfangen und geladen werden. Ferner steuert die Pegelauswerte- und Steuereinrichtung 13 die Spracherkennungsstufe 11c, so daß diese die empfangenen Wortschätze interpretiert. Die Feldstärke der empfangenen Signale der Geräte 3 bis 9 wird fortlaufend gemessen. Anhand der Meßergebnisse ermittelt die Recheneinheit 13a der Pegelauswerte- und Steuereinrichtung 13 ein Steuersignal 14, das an die Spracherkennungsstufe 11c übertragen wird und proportional zu der gemessenen Feldstärke eines Empfangssignals die Wahrscheinlichkeiten für das Auftreten eines Wortes oder mehrerer Worte und/oder Übergangswahrscheinlichkeiten zwischen Worten des entsprechenden Wortschatzes anhebt (wenn die Feldstärke des empfangenen Signales steigt) oder absenkt (wenn die Feldstärke des empfangenen Signals nachläßt). Durch die Ausrichtung des Sprachsteuerterminals 11 auf die Geräte 3 bis 9 wird somit mittels des Steuersignals 14 die Spracherkennungsrate beeinflußt.

Wird das Sprachsteuerterminal 11 auf den Küchenherd 9 gerichtet, ermittelt die Pegelauswerte- und Steuereinrichtung 13 ein Ansteigen der Feldstärke des von dem Küchenherd 9 gesendeten Signals und entscheidet zuerst, ob der Wortschatz des Küchenherdes 9 über die Wortschatz-Empfangseinheit 11e in den Wortschatz-Zwischenspeicher 11d empfangen und geladen wird. Gleichzeitig entscheidet die Pegelauswerte- und Steuereinrichtung 13, welcher der bereits im Wortschatz-Zwischenspeicher 11d gespeicherten Wortschätze verworfen werden soll. Dies ist üblicherweise der Wortschatz des Gerätes, welches das Signal mit der niedrigsten Feldstärke sendet oder dessen Signal überhaupt nicht mehr empfangen wird.

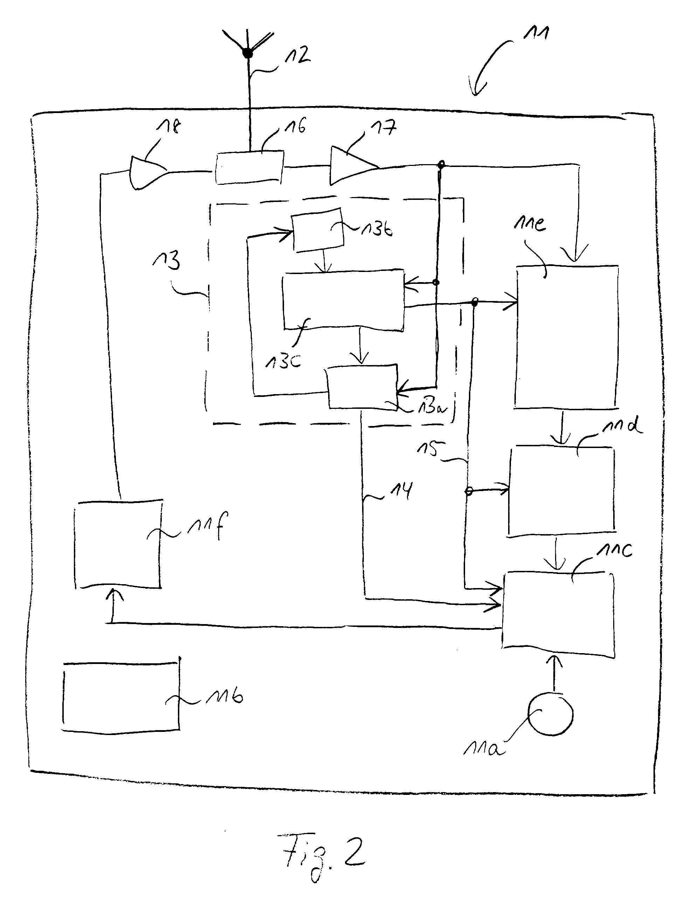

Fig.2 zeigt anhand eines Funktions-Blockschaltbildes den internen Aufbau des Sprachsteuerterminals 11 und insbesondere die Verschaltung der wesentlichen Funktionsblöcke.

Ein über die Antenne 12 mit Richtcharakteristik empfangenes Signal wird einem Transceiver 16 zugeführt, dem einerseits ein Empfangsverstärker 17 und andererseits die Wortschatz-Empfangseinheit 11e nachgeschaltet ist. Ein über die Antenne 12 empfangenes und vom Transceiver 16 aufbereitetes Signal wird der Pegelauswerte- und Steuereinrichtung 13 zugeführt. Aufgrund der Richtcharakteristik der Antenne werden nur Signale empfangen, die in dem "gerichteten" Empfangsbereich der Antenne liegen. Mittels der Antenne wird somit aus einer Vielzahl von Signalen eine Untermenge von Signalen selektiert, die im Empfangsbereich der Antenne liegen.

Die Pegelauswerte- und Steuereinrichtung 13 umfaßt die Recheneinheit 13a, eine Vergleichseinrichtung 13c sowie einen Schwellwertspeicher 13b. Die Recheneinheit 13a errechnet aus der Feldstärke des empfangenen Signals die Entfernung eines das Signal sendenden Gerätes. Das zugeführte Signal wird dann mittels der Vergleichseinrichtung 13c mit einem in dem Schwellwertspeicher 13b gespeicherten (Schwell-)Wert verglichen, der einer vorgegebenen Entfernung entspricht. Hierdurch werden die über die Antenne empfangenen Signale nochmals in - Abhängigkeit von der Entfernung ihrer Quellen selektiert.

Abhängig vom Vergleich wird mindestens ein Sperr-/Freigabesignal 15 gebildet, das der Wortschatz-Empfangseinheit 11e, dem Wortschatz-Zwischenspeicher 11d und der Spracherkennungsstufe 11c zugeführt wird und diese entweder sperrt oder freigibt. Die Freigabe erfolgt für den Fall, daß das der Pegelauswerte- und Steuereinrichtung 13 zugeführte Signal über dem in dem Schwellwertspeicher 13b gespeicherten Wert liegt, andernfalls erfolgt eine Sperrung. Sind die vorgenannten Einheiten gesperrt, kann der Wortschatz des Gerätes, welches das Signal gesendet hat, nicht geladen werden. In diesem Fall befindet sich das Gerät außerhalb der Reichweite zur Sprachsteuerung oder des von der Antenne 12 abgedeckten Empfangsbereiches.

Die Recheneinheit 13a dient auch zur Erzeugung des Schwellwertes. Hierzu wird das Signal am Ausgang des Empfangsverstärkers 17 der Recheneinheit 13a zugeführt. Diese kann das zugeführte Signal mit dem berechneten und aktuellen Schwellwert intern vergleichen und gegebenenfalls aus dem Signal einen neuen Schwellwert bilden sowie diesen im Schwellwertspeicher 13b abspeichern.

Die direkte Zuführung des Signals dient ferner zur Erzeugung eines Steuersignals 14, das der Spracherkennungsstufe zur Einstellung der Spracherkennung dient. Abhängig von der Feldstärke eines empfangenen Signals berechnet die Recheneinheit 13a, wie die Wahrscheinlichkeiten für das Auftreten eines Wortes oder mehrerer Worte und/oder Übergangswahrscheinlichkeiten zwischen Worten beeinflußt werden soll.

Zur Erläuterung dient folgende Beschreibung einer typischen Konstellation: Ein Teilnehmer bewegt sich von einem zu steuernden Gerät, dessen Wortschatz in das Sprachsteuerterminal 11 geladen ist, weg oder schwenkt das Sprachsteuerterminal 11 derart, daß das von dem Gerät gesendete Signal schwächer von der Antenne mit Richtcharakteristik empfangen wird. Insgesamt verringert sich die Empfangsfeldstärke des von dem Gerät ausgesendeten Signals am Sprachsteuerterminal 11. Das Signal wird allerdings noch immer über die Antenne 12 empfangen und über den Transceiver 16 und den Empfangsverstärker 17 der Recheneinheit 13a zugeführt. Diese errechnet aus dem Signalpegel etwa die Feldstärke und detektiert, daß diese schwächer als vorher ist (jedoch größer als der Schwellwert, da ansonsten der entsprechende Wortschatz zugunsten eines anderen Wortschatzes aus dem Wortschatz-Zwischenspeicher entfernt würde). Nun errechnet die Recheneinheit 13a aus der Differenz zwischen der aktuellen Feldstärke und der vorherigen Feldstärke das Steuersignal 14, das in der Spracherkennungsstufe die Wahrscheinlichkeiten für das Auftreten eines Wortes oder mehrerer Worte und/oder Übergangswahrscheinlichkeiten zwischen Worten des wortschatzes des Gerätes proportional zur Differenz absenkt (umgekehrt kann auch eine Anhebung erfolgen, wenn sich die Feldstärke größer geworden ist).

Eine besonders vorteilhafte Implementierung des Sprachsteuerterminals ergibt sich in Gestalt eines Mobiltelefons, dessen Spracheingabemöglichkeit und Rechenleistung sich (jedenfalls bei modernen Geräten) durchaus für die Sprachsteuerung von anderen Geräten nutzen läßt. In einem Mobiltelefon sind üblicherweise bereits eine Pegelauswerte- und Steuereinrichtung bzw. Feldstärkemeßeinrichtung und Analog/Digital-Wandler zum Digitalisieren der Antennenausgangssignale vorhanden, so daß lediglich noch die Selektionsmittel zur Spracherkennung implementiert werden müssen. Moderne Mobiltelefone sind zudem mit sehr leistungsfähigen Mikrocontrollern (üblicherweise 32 Bit-Mikrocontroller) ausgestattet, die zur Steuerung der Benutzerschnittstelle wie der Anzeigeeinheit 11b, der Tastatur, Telefonbuchfunktionen, etc. dienen. Ein derartiger Mikrocontroller kann zumindest teilweise auch Spracherkennungsfunktionen oder zumindest die Funktionen der Recheneinheit 13a der Pegelauswerte- und Steuereinrichtung 13 sowie der gesamten Steuerung der Freigabe und des Sperrens von der Wortschatz-Empfangseinheit 11e, des Wortschatz-Zwischenspeichers 11d und der Spracherkennungsstufe 11c sowie die Erzeugung des Steuersignals 14 übernehmen.

Neben Mobiltelefonen eignen sich selbstverständlich auch Schnurlostelefone vorteilhaft als Spracheingabeeinheit, insbesondere Schnurlostelefone gemäß dem DECT-Standard. Hierbei kann der DECT-Standard selbst zur Kommunikation mit den steuernden Geräten genutzt werden. Eine besonders komfortable Ausführung des Spracheingabeterminals ergibt sich - insbesondere für bestimmte professionelle Anwendungen, ggf. aber auch im Haushalts- bzw. Kraftfahrzeugbereich - mit der Ausführung der Spracheingabeeinheit als Mikrofon-Kopfhörereinheit (Headset).

Nachfolgend sei die Anwendung der vorgeschlagenen Lösung in einem Benutzer-Szenario kurz skizziert:

Ein Nutzer fährt mit seinem Auto vom Büro nach Hause. Im Auto wählt er über die Freisprecheinrichtung seines Mobiltelefons durch Einsprechen eines Sendernamens einen gewünschten Sender auf dem Autoradio aus. In diesem Fall ist das als Spracheingabeterminal verwendete Mobiltelefon nur auf ein Gerät, nämlich das Autoradio gerichtet.

Bei Ankunft an der Garage gelangt das Mobiltelefon in den Funkbereich einer Garagentorsteuerung und lädt den von dieser übertragenen Wortschatz in seinen Wortschatz-Zwischenspeicher. Der Nutzer kann nun durch Spracheingabe des Befehls "Garage öffnen" das Garagentor öffnen. Nachdem der Nutzer das Auto abgestellt und durch Einsprechen des entsprechenden Steuerbefehls die Garage geschlossen hat, nimmt er das Mobiltelefon, geht zur Haustür und richtet das Mobiltelefon auf eine Haustüröffnungsanlage. Nach Laden des Wortschatzes der Haustüröffnungsanlage in das Mobiltelefon kann der Nutzer den Steuerbefehl "Tür öffnen" in das Spracherkennungssystem im Mobiltelefon sprechen, wodurch die Tür geöffnet wird.

Beim Eintreten in ein Wohnzimmer gelangt das Mobiltelefon in den Funkbereich eines Fernsehers, einer Audio-Anlage und einer Beleuchtungsanlage. Der Nutzer richtet das Mobiltelefon zuerst auf die Beleuchtungsanlage, so daß der Wortschatz dieser in das Mobiltelefon geladen wird, wobei die nun überflüssigen Wortschätze des Autoradios und des Garagentoröffners verworfen werden. Nach Laden des Wortschatzes der Beleuchtungsanlage kann der Nutzer durch Spracheingabe entsprechender Befehle diese steuern.

Um den Fernseher bedienen zu können, richtet nun der Nutzer das Mobiltelefon auf den Fernseher, der in unmittelbarer Nähe zur Audio-Anlage plaziert ist. Das Mobiltelefon befindet sich daher im Funkbereich sowohl des Fernsehers als auch der Audio-Anlage und empfängt zwei Signale, nämlich eines vom Fernseher und eines von der Audio-Anlage. Das Signal der Beleuchtungsanlage ist im Vergleich zu den beiden vorgenannten Signalen schwächer, so daß in das Mobiltelefon nur die Wortschätze des Fernsehers und der Audio-Anlage geladen werden. Der Nutzer kann somit sowohl Fernseher als auch Audio-Anlage steuern.

Will er das Licht beim Fernsehen etwas abdunkeln, muß der Nutzer das Mobiltelefon wieder in Richtung der Beleuchtungsanlage halten, so daß der entsprechende Wortschatz in das Mobiltelefon geladen wird.

Das Laden eines Wortschatzes hängt von der Größe desselben ab, benötigt allerdings aufgrund der nur wenigen erforderlichen Steuerbefehle für den Fernseher, die Audio-Anlage, die Beleuchtungsanlage oder einen Herd nur Bruchteile von Sekunden. Das Laden eines Wortschatzes kann beispielsweise im Display des Mobiltelefons angezeigt werden. Nachdem der Wortschatz in das Mobiltelefon geladen ist, kann dies beispielsweise durch einen kurzen Signalton, eine LED-Anzeige angezeigt werden, welche beispielsweise von Rot auf Grün umschaltet. Sobald der Nutzer erkennt, daß der Wortschatz geladen ist, kann er die Beleuchtungsanlage sprachsteuern. Zur Steuerung des Fernsehers oder der Audio-Anlage muß er das Mobiltelefon auf diese Geräte richten. Üblicherweise besitzen Fernseher und Audio-Anlage zumindest teilweise dieselben Befehle (beispielsweise zum Einstellen der Tonhöhe und der Lautstärke) . Je nach dem in welche Richtung der Nutzer das Mobiltelefon nun hält, also mehr in Richtung zum Fernseher oder in Richtung zur Audio-Anlage, wird anhand der gemessenen Feldstärke der Signale des Fernsehers und der Audio-Anlage die Wahrscheinlichkeit bestimmt, welches Gerät der Nutzer steuern möchte. Spricht der Nutzer beispielsweise den Befehl "Lautstärke erhöhen" in das Mobiltelefon und hält er dieses mehr in Richtung des Fernsehers als in Richtung der Audio-Anlage, so wird aufgrund der Antenne mit Richtcharakteristik des Mobiltelefons eine höhere Feldstärke des Signals des Fernsehers als des Signals der Audio-Anlage gemessen und dementsprechend der Befehl "Lautstärke erhöhen" dem Fernseher zugeordnet.

Die Ausführung der Erfindung ist nicht auf oben beschriebenen Beispiele und Anwendungsfälle beschränkt, sondern ebenso in einer Vielzahl von Abwandlungen möglich, die im Rahmen fachgemäßen Handelns liegen.

### Bezugszeichenliste

- 1: Gerätekonfiguration
- 3: Fernsehgerät
- 3a: Wortschatzspeicher
- 3b: Wortschatzsendeeinheit
- 3c: Steuerbefehl-Empfangseinheit
- 3d: Mikrocontroller
- 5: Audio-Anlage
- 5a: Wortschatzspeicher
- 5b: Wortschatzsendeeinheit
- 5c: Steuerbefehl-Empfangseinheit
- 5d: Mikrocontroller
- 7: Beleuchtungseinheit
- 7a: Wortschatzspeicher
- 7b: Wortschatzsendeeinheit
- 7c: Steuerbefehl-Empfangseinheit
- 7d: Mikrocontroller
- 9: Küchenherd
- 9a: Wortschatzspeicher
- 9b: Wortschatzsendeeinheit
- 9c: Steuerbefehl-Empfangseinheit
- 9d: Mikrocontroller
- 11: mobiles Sprachsteuerterminal
- 11a: Sprechkapsel
- 11b: Anzeigeeinheit
- 11c: Spracherkennungsstufe
- 11d: Wortschatz-Zwischenspeicher
- 11e: Wortschatz-Empfangseinheit
- 11f: Steuerbefehl-Sendeeinheit
- 12: Antenne mit Richtungscharakteristik
- 13: Pegelauswerte- und Steuereinrichtung
- 13a: Recheneinheit
- 13b: Schwellwertspeicher
- 13c: Vergleichseinrichtung
- 14: Steuersignal
- 15: Sperr-/Freigabesignal
- 16: Transceiver
- 17: Empfangsverstärker
- 18: Sendeverstärker

## Patentansprüche

1. Sprachgesteuerte Anordnung (1) mit einer Mehrzahl von zu steuernden Geräten (3 bis 9) und einer mobilen, mit den Geräten über eine drahtlose Nachrichtenverbindung verbundene Spracheingabeeinheit (11), wobei mindestens ein Teil der Geräte jeweils einen Geräte-Wortschatzspeicher (3a bis 9a) zur Speicherung eines gerätespezifischen Wortschatzes und eine Wortschatz-Sendeeinheit (3b bis 9b) zur Übertragung des gespeicherten Wortschatzes an die Spracheingabeeinheit aufweist und die Spracheingabeeinheit eine Wortschatz-Empfangseinheit (11e) zum Empfangen des von dem Gerät übertragenen Wortschatzes bzw. der von den Geräten übertragenen Wortschätze, Mittel zur Spracheingabe (11a), eine mit den Mitteln zur Spracheingabe und mindestens mittelbar mit der Wortschatz-Empfangseinheit verbundene Spracherkennungsstufe (11c) sowie mindestens einen zwischen die Wortschatz-Empfangseinheit (11e) und die Spracherkennungsstufe (11c) geschalteten Wortschatz-Zwischenspeicher (11d) aufweist, in dem geladene Wortschätze gespeichert werden,
**dadurch gekennzeichnet, daß**
in der Spracheingabeeinheit (11) Selektionsmittel (12, 13, 13a-13c) zur Selektion von in den bzw. die Wortschatz-Zwischenspeicher (11d) zu ladenden Wortschätzen abhängig von einer Richtungsinformation empfangener, von den Geräten gesendeter Signale vorgesehen sind.

2. Sprachgesteuerte Anordnung nach Anspruch 1,
**dadurch gekennzeichnet, daß**
die Selektionsmittel einen Detektor, insbesondere eine Antenne (12), mit einer Richtcharakteristik umfassen, der einen Pegel eines Signals abhängig von seiner Ausrichtung in Bezug auf ein das Signal sendendes Gerät detektiert.

3. Sprachgesteuerte Anordnung nach Anspruch 1 oder 2,
**dadurch gekennzeichnet, daß**
die Selektionsmittel eine Einrichtung zur Pegelauswertung und Steuerung (13) umfassen, welche den Pegel mindestens eines empfangenen Signals bestimmt und davon abhängig die Wortschatz-Empfangseinheit (11e) und/oder den bzw. die Wortschatz-Zwischenspeicher (11d) und/oder die Spracherkennungsstufe (11c) steuert, insbesondere das Laden und Speichern eines Wortschatzes ausführt.

4. Sprachgesteuerte Anordnung nach Anspruch 3,
**dadurch gekennzeichnet, daß**
die Einrichtung zur Pegelauswertung und Steuerung (13) dazu ausgebildet ist, daß ein durch ein empfangenes Signal übertragener Wortschatz bei Überschreiten eines bestimmten Pegels geladen wird.

5. Sprachgesteuerte Anordnung nach Anspruch 4,
**dadurch gekennzeichnet, daß**
mehrere Wortschätze von Geräten gleichzeitig geladen sind und die Einrichtung zur Pegelauswertung und Steuerung (13) derart ausgebildet ist, daß der Wortschatz eines weiteren Gerätes in die Spracheingabeeinheit geladen wird und einen dort geladenenen Wortschatz ersetzt, sobald das empfangene Signal des weiteren Gerätes einen vorgegebenen Pegel und/oder den Pegel des den zu ersetzenden Wortschatz übertragenden bzw. diesem zugeordneten Signals überschreitet.

6. Sprachgesteuerte Anordnung nach Anspruch 5,
**dadurch gekennzeichnet, daß**
genau ein Wortschatz eines Gerätes geladen und die Einrichtung zur Pegelauswertung und Steuerung (13) derart ausgebildet ist, daß der geladene Wortschatz durch den Wortschatz eines weiteren Gerätes ersetzt wird, sobald ein empfangenes Signal des weiteren Gerätes den vorgegebenen Pegel und/oder den Pegel des den zu ersetzenden Wortschatzes übertragenden bzw. diesem zugeordneten Signals überschreitet.

7. Sprachgesteuerte Anordnung nach einem der Ansprüche 3 bis 6,
**dadurch gekennzeichnet, daß**
die Einrichtung zur Pegelauswertung und Steuerung (13) dazu ausgebildet ist, den in die Spracheingabeeinheit (11) geladenen Wortschätzen unterschiedliche Prioritäten zuzuweisen, wobei die Zuweisung von Prioritäten in Abhängigkeit von den Verhältnissen der Pegel der die Wortschätze übertragenden bzw. diesen zugeordneten Signale erfolgt, derart, daß ein stärkerer Pegel eine höhere Priorität als ein schwächerer Pegel bewirkt.

8. Sprachgesteuerte Anordnung nach einem der Ansprüche 3 bis 7,
**dadurch gekennzeichnet, daß**
die Einrichtung zur Pegelauswertung und Steuerung (13) dazu ausgebildet ist, mindestens ein Steuersignal (14) zu erzeugen, das in Abhängigkeit von dem ausgewerteten Pegel mindestens eines empfangenen Signals eines Gerätes gebildet wird und die Erkennungsfunktion der Spracherkennungsstufe (11c) derart steuert, daß Wahrscheinlichkeiten für das Auftreten eines Wortes oder mehrerer Worte und/oder Übergangswahrscheinlichkeiten zwischen Worten des dem Gerät zugeordneten und geladenen Wortschatzes insbesondere proportional zum Pegel angehoben oder abgesenkt werden.

9. Sprachgesteuerte Anordnung nach einem der vorangehenden Ansprüche,
**dadurch gekennzeichnet, daß**
die Wortschatz-Sendeeinheit bzw. Wortschatz-Sendeeinheiten (3b bis 9b) und die Wortschatz-Empfangseinheit (11e) als Funksende- bzw. -empfangseinheit, insbesondere nach dem Bluetooth-Standard, ausgebildet sind.

10. Sprachgesteuerte Anordnung nach einem der Ansprüche 1 bis 8,
**dadurch gekennzeichnet, daß**
die Wortschatz-Sendeeinheit bzw. Wortschatz-Sendeeinheiten (3b bis 9b) und die Wortschatz-Empfangseinheit (11e) als Infrarot-Sende- bzw. -Empfangseinheit ausgebildet sind.

11. Sprachgesteuerte Anordnung nach einem der vorangehenden Ansprüche,
**dadurch gekennzeichnet, daß**
in den Geräte-Wortschatzspeichern (3a bis 9a) im wesentlichen Steuerbefehle für das jeweilige Gerät (3 bis 9) sowie Begleitvokabular zu diesen gespeichert sind.

12. Sprachgesteuerte Anordnung nach einem der vorangehenden Ansprüche,
**dadurch gekennzeichnet, daß**
mindestens ein Teil der Geräte (3 bis 9) als stationäres Gerät ausgebildet ist.

13. Verfahren zur Spracheingabe und -erkennung, insbesondere in einer Anordnung nach einem der vorangehenden Ansprüche, wobei gerätespezifische Wortschätze dezentral gespeichert werden und eine zentrale Spracheingabe und -erkennung vorgenommen wird, wobei mindestens ein dezentral gespeicherter Wortschatz vorab an den Ort der Spracherkennung mittels einer drahtlosen Nachrichtenverbindung übermittelt wird,
**dadurch gekennzeichnet, daß**
der übermittelte Wortschatz bzw. die übermittelten Wortschätze in Abhängigkeit von der Auswertung der Richtungsinformation eines den Wortschatz übermittelnden Signals bzw. von die Wortschätze übermittelnden Signalen am Ort der Spracherkennung gespeichert und eingesetzt wird bzw. werden.

14. Verfahren nach Anspruch 13,
**dadurch gekennzeichnet, daß**
der übermittelte Wortschatz bzw. die übermittelten Wortschätze in Abhängigkeit von der Auswertung des Pegel eines den Wortschatz übermittelnden Signals bzw. von die Wortschätze übermittelnden Signalen am Ort der Spracherkennung gespeichert und eingesetzt wird bzw. werden.

15. Verfahren nach Anspruch 14,
**dadurch gekennzeichnet, daß**
mehrere Wortschätze von Geräten gleichzeitig geladen sind und der Wortschatz eines weiteren Gerätes in die Spracheingabeeinheit geladen wird und einen dort geladenenen Wortschatz ersetzt, sobald das empfangene Signal des weiteren Gerätes einen vorgegebenen Pegel und/oder den Pegel des den zu ersetzenden Wortschatz übertragenden bzw. diesem zugeordneten Signals überschreitet.

16. Verfahren nach Anspruch 15,
**dadurch gekennzeichnet, daß**
genau ein Wortschatz eines Gerätes geladen ist und der geladene Wortschatz durch den Wortschatz eines weiteren Gerätes ersetzt wird, sobald ein empfangenes Signal des weiteren Gerätes den vorgegebenen Pegel und/oder den Pegel des den zu ersetzenden Wortschatzes übertragenden bzw. diesem zugeordneten Signals überschreitet.

17. Verfahren nach einem der Ansprüche 13 bis 16,
**dadurch gekennzeichnet, daß**
den in die Spracheingabeeinheit (11) geladenen Wortschätzen unterschiedliche Prioritäten zugewiesen werden, wobei die Zuweisung von Prioritäten in Abhängigkeit von den Verhältnissen der Pegel der die Wortschätze übertragenden Signale erfolgt, derart, daß ein stärkerer Pegel eine höhere Priorität als ein schwächerer Pegel bewirkt.

18. Verfahren nach einem der Ansprüche 13 bis 17,
**dadurch gekennzeichnet, daß**
mindestens ein Steuersignal (14) in Abhängigkeit von dem ausgewerteten Pegel mindestens eines empfangenen Signals eines Gerätes gebildet wird und die Erkennungsfunktion der Spracherkennungsstufe (11c) derart steuert, daß Wahrscheinlichkeiten für das Auftreten eines Wortes oder mehrerer Worte und/oder Übergangswahrscheinlichkeiten zwischen Worten des dem Gerät zugeordneten und geladenen Wortschatzes insbesondere proportional zum Pegel angehoben oder abgesenkt werden.
